# EUROPÄISCHE PATENTSCHRIFT

(11) **EP 3 375 551 B1**
(45) Veröffentlichungstag und Bekanntmachung des Hinweises auf die Patenterteilung: **03.04.2024**
(21) Anmeldenummer: 18000253.7
(22) Anmeldetag: 14.03.2018
(51) Int. Cl.: B23B 31/08

(54) **PENDELHALTER MIT EINSTELLBAREM RADIALSPIEL**
PENDULUM HOLDER WITH ADJUSTABLE CLEARANCE
SUPPORT DE SUSPENSION À JEU RADIAL RÉGLABLE

(30) Priorität: 14.03.2017 DE 102017105340
(43) Veröffentlichungstag der Anmeldung: 19.09.2018
(73) Patentinhaber: Wissing, Johannes, 48703 Stadtlohn (DE)
(72) Erfinder: Wissing, Johannes, 48703 Stadtlohn (DE)
(74) Vertreter: Patentanwälte Olbricht Buchhold Keulertz

(56) Entgegenhaltungen:
- EP-A1- 2 805 785
- DE-A1-102014 112 603
- US-A- 2 416 586

## Beschreibung

Die Erfindung betrifft einen Pendelhalter nach dem Oberbegriff des Anspruchs 1.

Aus der US 2 416 586 A, die als am nächsten kommender Stand der Technik angesehen wird, ist ein gattungsgemäßer Pendelhalter bekannt.

Aus der EP 2 805 785 A1 ist ein Pendelhalter bekannt, bei dem ein elastisches Vorspannelement zwar einerseits einen Winkelausgleich zwischen der Maschinen- und der Werkzeugaufnahme ermöglicht, andererseits jedoch so vorgespannt werden kann, dass eine Winkelabweichung vermieden werden kann, die allein aufgrund des Eigengewichts der Werkzeugaufnahme und des darin gehaltenen Werkzeugs auftreten könnte.

Aus der DE 10 2014 112 603 A1 ist ein Pendelhalter bekannt, bei dem ein elastischer Ring zwischen den beiden Kupplungselementen der Ausgleichskupplung angeordnet ist und das Radialspiel durch die unterschiedlich starke Verformung des elastischen Rings einstellbar ist.

Der Erfindung liegt die Aufgabe zugrunde, einen gattungsgemä-ßen Pendelhalter dahingehend weiterzubilden, dass das mittels des Pendelhalters mögliche Radialspiel präzise auf einen definierten Maximalwert einstellbar ist.

Diese Aufgabe wird durch einen Pendelhalter mit den Merkmalen des Anspruchs 1 gelöst. Vorteilhafte Ausgestaltungen sind in den Unteransprüchen beschrieben.

Die Erfindung schlägt mit anderen Worten vor, zwischen den beiden das Radialspiel ermöglichenden Kupplungselementen nicht ein elastisches Element anzuordnen, welches je nach Vorspannung ein unterschiedlich großes Radialspiel ermöglicht, sondern vielmehr ist vorschlagsgemäß eine Schrägfläche an einem der beiden Kupplungselemente vorgesehen sowie eine Verstellbarkeit der beiden Kupplungselemente gegeneinander, so dass die Schrägfläche je nach der Relativstellung, welche die beiden Kupplungselemente zueinander einnehmen, einen unterschiedlich großen wirksamen Abstand zu dem jeweils anderen Kupplungselement einnimmt. Auf diese Weise ist das Radialspiel durch die Spaltbreite des Ringspalts, die zwischen den beiden Kupplungselementen eingestellt ist, präzise definiert. Da das radial äußere Kupplungselement beiderseits des Ringspaltes anderen Bauteilen des Pendelhalters anliegt, wird verhindert, dass Verschmutzungen in den Ringspalt eindringen können und so das gewünschte Radialspiel beeinträchtigen können. Zudem ergibt sich das Radialspiel nicht unmittelbar aus dem Abstandsmaß zwischen den beiden Kupplungselementen, sondern vielmehr sind vorschlagsgemäß zwischen den beiden Kupplungselementen Lagerkörper in dem Ringspalt angeordnet. Hierzu ist der Ringspalt zwischen den beiden Kupplungselementen so groß bemessen, dass darin die Lagerkörper aufgenommen werden und die dann verbleibende freie Spaltbreite das Radialspiel des Pendelhalters bestimmt.

In einer Ausgestaltung kann vorgesehen sein, dass sich die Schrägfläche zirkumferent um die Mittelachse des Pendelhalters erstreckt, so dass durch eine Drehbewegung der beiden Kupplungselemente relativ zueinander die wirksame Spaltbreite und somit das Radialspiel des Pendelhalters eingestellt werden kann. Vorteilhaft jedoch kann vorgesehen sein, dass sich die Schrägfläche in axialer Richtung erstreckt bezogen auf die Mittelachse des Pendelhalters, und dass dementsprechend die beiden Kupplungselemente relativ zueinander in axialer Richtung beweglich sind. Durch diese Ausgestaltung müssen nicht um den Umfang verteilt mehrere zirkumferent verlaufende Schrägflächen geschaffen werden, sondern die Schrägfläche kann durch ein einfaches Drehteil verwirklicht werden. Dies vereinfacht nicht nur die Herstellung des Pendelhalters und ermöglicht dessen wirtschaftliche Fertigung, sondern ermöglicht auch eine optimal präzise Führung der beiden radial gegeneinander beweglichen Elemente des Werkzeughalters, nämlich der Maschinenaufnahme und der Werkzeugaufnahme, da zirkumferent eine Vielzahl von Anlagestellen ermöglicht wird, wo die Werkzeugaufnahme der Maschinenaufnahme des Pendelhalters anliegen kann, während bei einer zirkumferenten Anordnung von mehreren Schrägflächen hintereinander diese Anzahl erheblich stärker begrenzt wäre.

Vorteilhaft kann bei einer solchen axial verlaufenden Schrägfläche die Verstellbarkeit der beiden Kupplungselemente gegeneinander mittels eines Schraubgewindes verwirklicht werden. Je nach Gewindesteigung kann durch einen vergleichsweise gro-ßen Verstellweg, nämlich in zirkumferenter Richtung, ein vergleichsweise geringer Verstellweg in axialer Richtung erzielt werden, so dass eine besonders feinfühlige und genaue Einstellung des gewünschten Radialspiels ermöglicht wird.

Vorteilhaft können die Lagerkörper als Kugeln ausgestaltet sein. Aufgrund ihrer geringen Berührungsfläche ermöglichen sie einerseits einen besonders leichten Lauf des Pendelhalters und zudem sind derartige Lagerkörper handelsüblich und somit sehr wirtschaftlich und in sehr hoher Präzision, was ihre Abmessungen angeht, erhältlich.

Ein Ausführungsbeispiel der Erfindung wird anhand der rein schematischen Darstellung nachfolgend näher erläutert.

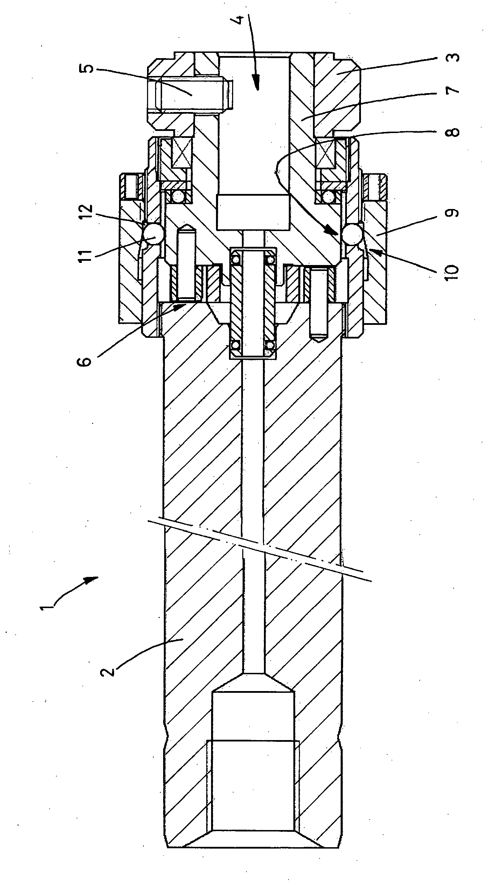

In der Zeichnung ist mit 1 insgesamt ein Werkzeughalter dargestellt, der als Pendelhalter bezeichnet wird und der eine Maschinenaufnahme 2 sowie eine Werkzeugaufnahme 3 aufweist. Die Werkzeugaufnahme 3 weist eine Aufnahmeöffnung 4 auf, in welche ein Werkzeug eingesetzt und mittels einer radialen Sicherungsschraube 5 festgesetzt werden kann.

Zwischen der Maschinenaufnahme 2 und der Werkzeugaufnahme 3 ist eine Ausgleichskupplung 6 vorgesehen, deren Aufbau an sich bekannt ist, beispielsweise aus der DE 10 2014 112 603 A1, so dass auf diesem grundsätzlichen Aufbau im Rahmen der vorliegenden Beschreibung nicht näher eingegangen zu werden braucht.

Eine Aufnahmehülse 7, welche auch die Aufnahmeöffnung 4 schafft, bildet im Bereich ihres Hülsenbodens ein Kupplungselement 8 als Teil der Werkzeugaufnahme 3. Diesem ersten Kupplungselement 8 ist ein zweites Kupplungselement 9 als Teil der Maschinenaufnahme 2 zugeordnet, und dieses zweite Kupplungselement 9 weist eine Schrägfläche 10 auf, die sich in axialer Richtung parallel zur Mittelachse des Pendelhalters 1 erstreckt und aufgrund ihres schrägen Verlaufs unterschiedliche Abstände von dieser Mittelachse aufweist.

Zwischen der Schrägfläche 10 und dem ersten Kupplungselement 8 sind Lagerkörper 11 in Form von Lagerkugeln angeordnet, wobei ein Ringspalt 12 zwischen den beiden Kupplungselementen 8 und 9 verbleibt, der durch die Lagerkörper 11 zum größten Teil ausgefüllt bzw. überbrückt wird. Ein kleiner, verbleibender freier Anteil dieses Ringspalts 12 definiert das Radialspiel, welches zwischen der Aufnahmehülse 7 und dem zweiten Kupplungselement 9 möglich ist. Je nach der Position, welche das zweite Kupplungselement 9 in axialer Richtung einnimmt, verändert sich aufgrund des Verlaufs der Schrägfläche 10 die Breite dieses freien verbleibenden Anteils des Ringspalts 12, so dass der Ringspalt 12 unterschiedliche wirksame Spaltbreiten aufweist und dementsprechend der Pendelhalter 1 je nach Stellung des zweiten Kupplungselementes 9 ein unterschiedliches, präzise einstellbares Radialspiel aufweist.

Das zweite Kupplungselement 9 ist als Mutter ausgestaltet bzw. als Gewindehülse, und jedenfalls mittels eines Gewindes gegenüber dem Schaft der Maschinenaufnahme 2 verdrehbar, wobei aufgrund der Gewindesteigung durch die Verdrehung dieses Kupplungselements 9 auch gleichzeitig eine axiale Verstellung des Kupplungselements 9 bewirkt wird und somit eine feinfühlige Einstellbarkeit des Radialspiels des Pendelhalters 1 ermöglicht wird. Da für die Einstellung des Radialspiels ausschließlich starre, nicht komprimierbare Bauelemente verwendet werden, kann je nach Axialstellung des Kupplungselements 9 und dementsprechend je nach Drehstellung des auf dem Gewinde laufenden Kupplungselements 9 das Radialspiel des Pendelhalters 1 präzise angegeben werden. So kann beispielsweise eine Skala am Pendelhalter 1 vorgesehen sein, die je nach Drehstellung des Kupplungselements 9 einen Wert für das aufgrund dieser Drehstellung eingestellte Radialspiel anzeigt.

## Patentansprüche

1. Als Pendelhalter (1) bezeichneter Werkzeughalter,
mit einer in eine Werkzeugmaschine einspannbaren Maschinenaufnahme (2),
und mit einer Werkzeugaufnahme (3), in deren Aufnahmeöffnung (4) ein Werkzeug einsetzbar ist,
und mit einer zwischen der Maschinenaufnahme (2) und der Werkzeugaufnahme (3) angeordneten, einen radialen Versatz zwischen den beiden genannten Elementen des Pendelhalters (1) ermöglichenden Ausgleichskupplung (6), wobei in der Ausgleichskupplung (6) zwei konzentrische Kupplungselemente (8, 9) angeordnet sind, die zwischen sich einen ringförmigen Spalt (12) schaffen,
von denen ein Kupplungselement (9) an der Maschinenaufnahme (2) und das andere Kupplungselement (8) an der Werkzeugaufnahme (3) befestigt ist,
wobei eines dieser Kupplungselemente (8, 9) eine Schrägfläche (10) aufweist, welche einen sich vergrößernden radialen Abstand zur Mittelachse des Pendelhalters (1) aufweist,
und wobei die beiden Kupplungselemente (8, 9) relativ zueinander beweglich und in unterschiedlichen Relativstellungen feststellbar sind,
derart, dass je nach Relativstellung der ringförmige Spalt (12) zwischen diesen beiden Kupplungselementen (8, 9) eine unterschiedlich große wirksame, die Radialbeweglichkeit zwischen der Maschinenaufnahme (2) und der Werkzeugaufnahme (3) bestimmende Spaltbreite aufweist, wobei zwischen den beiden Kupplungselementen (8, 9) Lagerkörper (11) angeordnet sind,
**dadurch gekennzeichnet,**
**dass** die Lagerkörper (11) im ringförmigen Spalt (12) zwischen der Schrägfläche und dem gegenüberliegenden Kupplungselement (8, 9) angeordnet sind.

2. Pendelhalter nach Anspruch 1,
**dadurch gekennzeichnet,**
**dass** sich die Schrägfläche (10) in axialer Richtung erstreckt, bezogen auf die Mittelachse des Pendelhalters (1), und dass die beiden Kupplungselemente (8, 9) relativ zueinander axial beweglich sind.

3. Pendelhalter nach Anspruch 2,
**dadurch gekennzeichnet,**
**dass** eines der Kupplungselemente (8, 9) mittels eines Schraubgewindes axial gegenüber dem anderen Kupplungselement (8, 9) verstellbar ist.

4. Pendelhalter nach einem der vorhergehenden Ansprüche, **dadurch gekennzeichnet,**
**dass** die Lagerkörper (11) als Kugeln ausgestaltet sind.

## Claims

1. Tool holder designated as a pendulum holder (1), with a machine holder (2) that can be clamped in a machine tool, and with a tool holder (3), into the holder opening (4) of which a tool can be inserted, and with an equalising coupling (6) arranged between the machine holder (2) and the tool holder (3) allowing a radial offset between the two said elements of the pendulum holder (1), where two concentric coupling elements (8, 9) are arranged in the equalising coupling (6) which create an annular gap (12) between them, of which one coupling element (9) is attached to the machine holder (2) and the other coupling element (8) to the tool holder (3), where one of these coupling elements (8, 9) has an inclined surface (10) which has an increasing radial distance from the centre axis of the pendulum holder (1), and where the two coupling elements (8, 9) are movable relative to one another and can be fixed in different relative positions, such that, depending on the relative position, the annular gap (12) between these two coupling elements (8, 9) has a different effective gap width which determines the radial movement between the machine holder (2) and the tool holder (3), where bearing bodies (11) are arranged between the two coupling elements (8, 9), **characterised in that** the bearing bodies (11) are arranged in the annular gap (12) between the inclined surface and the opposite coupling element (8, 9).

2. Pendulum holder according to claim 1, **characterised in that** the inclined surface (10) extends in the axial direction, relative to the centre axis of the pendulum holder (1), and that the two coupling elements (8, 9) are axially movable relative to one another.

3. Pendulum holder according to claim 2, **characterised in that** one of the coupling elements (8, 9) is axially adjustable relative to the other coupling element (8, 9) by means of a screw thread.

4. Pendulum holder according to one of the preceding claims, **characterised in that** the bearing bodies (11) are designed as balls.

## Revendications

1. Porte-outil appelé « support de suspension » (1), comprenant un logement machine (2) serrable dans une machine-outil, et comprenant un logement (3) d'outil, logement dans l'orifice (4) duquel peut être introduit un outil, et comprenant un accouplement compensateur (6), disposé entre le logement machine (2) et le logement (3) d'outil et permettant un décalage radial entre les deux éléments mentionnés du support de suspension (1), sachant que dans l'accouplement compensateur (6) sont disposés deux éléments d'accouplement (8, 9) concentriques qui créent entre eux un interstice annulaire (12), l'un des éléments d'accouplement (9) étant fixé contre le logement machine (2) et l'autre élément d'accouplement (8) étant fixé contre le logement (3) d'outil, sachant que l'un de ces éléments d'accouplement (8, 9) présente une surface oblique (10) qui présente elle-même un écart radial allant en augmentant par rapport à l'axe médian du support de suspension (1), et sachant que les deux éléments d'accouplement (8, 9) sont mobiles l'un relativement à l'autre et qu'ils sont immobilisables sur des positions relatives différentes, de sorte qu'en fonction de la position relative l'interstice annulaire (12) présente, entre ces deux éléments d'accouplement (8, 9), une largeur efficace variable, largeur qui définit la mobilité radiale entre le logement machine (2) et le logement (3) d'outil, sachant qu'entre les deux éléments d'accouplement (8, 9) sont disposés des corps (11) de palier, **caractérisé en ce que** les corps (11) de palier sont disposés dans l'interstice annulaire (12) entre la surface oblique et l'élément d'accouplement (8, 9) lui faisant face.

2. Support de suspension selon la revendication 1, **caractérisé en ce que** la surface oblique (10) s'étend en direction axiale par rapport à l'axe médian du support de suspension (1), et que les deux éléments d'accouplement (8, 9) sont mobiles axialement l'un relativement à l'autre.

3. Support de suspension selon la revendication 2, **caractérisé en ce que** l'un des éléments d'accouplement (8, 9) est ajustable axialement, au moyen d'un filetage hélicoïdal, par rapport à l'autre élément d'accouplement (8, 9).

4. Support de suspension selon l'une des revendications précédentes, **caractérisé en ce que** les corps (11) de palier sont configurés en forme de billes.
